(19) **Europäisches Patentamt / European Patent Office / Office européen des brevets**

(11) **EP 3 973 501 B1**

(12) **EUROPEAN PATENT SPECIFICATION**

(45) Date of publication and mention
of the grant of the patent:
**10.12.2025  Bulletin 2025/50**

(21) Application number: **19735087.9**

(22) Date of filing: **18.06.2019**

(51) International Patent Classification (IPC):
**G06T 7/00** (2017.01)   **G06T 3/40** (2024.01)

(52) Cooperative Patent Classification (CPC):
**G06T 7/0002; G06T 3/4092;** G06T 2207/20021;
G06T 2207/20056; G06T 2207/30168

(86) International application number:
**PCT/US2019/037638**

(87) International publication number:
**WO 2020/256698 (24.12.2020 Gazette 2020/52)**

(54) **DYNAMIC IMAGE RESOLUTION ASSESSMENT**

DYNAMISCHE BILDAUFLÖSUNGSBEWERTUNG

ÉVALUATION DYNAMIQUE DE LA RÉSOLUTION D'UNE IMAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**30.03.2022  Bulletin 2022/13**

(73) Proprietor: **Huawei Technologies Co., Ltd.
Shenzhen, Guangdong 518129 (CN)**

(72) Inventors:
• **SU, Wei
Redmond, Washington 98053 (US)**

• **LIU, Xin
Kirkland, Washington 98033 (US)**

(74) Representative: **Isarpatent
Patent- und Rechtsanwälte Barth
Charles Hassa Peckmann & Partner mbB
Friedrichstrasse 31
80801 München (DE)**

(56) References cited:
**US-A1- 2016 379 057**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure is related to dynamic image resolution assessment prior to deep neural network (DNN) processing of image data, such as image data from real-time streaming videos.

BACKGROUND

Deep neural networks (DNN) are trained on proprietary datasets for performing specific image-processing tasks, such as image recognition. A DNN usually performs well on the test dataset, apart from the training data. However, when the same DNN model is deployed on mobile devices (e.g., smartphones), a significant accuracy drop in the DNN performance is noted. The problem has its root in the discrepancy between the high-quality example videos in the test dataset (as well as the DNN training dataset) and the low-quality streaming videos often associated with mobile device use. Among all factors, the low actual resolution of the video frames, which is defined with respect to the highest frequency that a digital image can represent, is a major reason that impairs the performance of DNNs.

When the resolution is low, the image appears blurry and cannot activate the low-level convolutional kernels of a DNN that are trained on sharp images for feature extraction, such as for determining edges and corners. The weak activations of the low-level kernels then cause the invalid inference of higher levels, and hence a chain reaction that finally impairs the accuracy of the DNN as deployed on a mobile device. The low-resolution is typically associated with streaming videos shot with older devices and low-end cameras, over-compression (especially in low-bandwidth settings), and fake high resolution (HR) videos intentionally created by Internet users by up-sampling. Assessing the image resolution at mobile devices for purposes of using a DNN is, therefore, an important task for improving the DNN's performance.

Document US 2016379057 A1 (I. KATSAVOUNIDIS) 29.12.2016 determines native resolutions of video sequences, whereas the 2D energy spectrum of the image is calculated using a DFT and projected onto one dimension.

SUMMARY

Various examples are now described to introduce a selection of concepts in a simplified form, which are further described below in the detailed description. The invention is defined by the appended claims.

BRIEF DESCRIPTION OF THE DRAWINGS

In the drawings, which are not necessarily drawn to scale, like numerals may describe similar components in different views. The drawings illustrate generally, by way of example, but not by way of limitation, various embodiments discussed in the present document.

FIG. 1 is a block diagram illustrating the training of a deep learning (DL) program using a DL training architecture (DLTA) with data or neural network model adjustment based on image resolution, according to some example embodiments.

FIG. 2 is a diagram illustrating generation of a trained DL program using a neural network model trained within a DLTA, according to some example embodiments.

FIG. 3 is a diagram illustrating image resolution assessment using parallel processing on multiple image chips, according to some example embodiments.

FIG. 4 is a diagram illustrating a sparse application of Gaussian windows on image chips in connection with image resolution assessment, according to some example embodiments.

FIG. 5 is a diagram illustrating different sampling patterns that can be used for selecting image chips within an image in connection with image resolution assessment, according to some example embodiments.

FIG. 6 illustrates image replication during a discrete Fourier transformation in connection with image resolution assessment, according to some example embodiments.

FIG. 7 illustrates a "paper folding" technique for accelerating one-dimensional (1D) omnidirectional spectrum calculation in connection with image resolution assessment, according to some example embodiments.

FIG. 8 illustrates a flowchart of image resolution assessment, according to some example embodiments.

FIG. 9 is a block diagram illustrating a representative software architecture, which may be used in conjunction with various device hardware described herein, according to some example embodiments.

FIG. 10 is a block diagram illustrating circuitry for a device that implements algorithms and performs methods, according to some example embodiments.

DETAILED DESCRIPTION

In the following description, reference is made to the accompanying drawings that form a part hereof, and in which are shown, by way of illustration, specific embodiments which may be practiced. These embodiments are described in sufficient detail to enable those skilled in the art to practice the inventive subject matter, and it is to be understood that other embodiments may be utilized within the scope of the appended claims.

Image resolution assessment has been previously studied within the bigger topic of blind or no-reference image quality assessment. To assess the resolution of a digital image, a traditional method calculates the frequency spectrum of the image by Discrete Fourier Transform (DFT) or Discrete Cosine Transform (DCT) and then examines the distribution of the spectrum to find a quantitative metric of the image resolution. However, DFT and DCT are global transforms applied to the whole image, so the image resolution calculated by such algorithms is usually a coarse metric averaged on all parts of the image. This is particularly imprecise for those images with large areas of simple or blurred background.

To improve accuracy, some existing algorithms use wavelet transforms for image resolution assessment. While wavelet transforms can evaluate multi-scale frequency characteristics at each location, their computational complexity is usually too high to be used in real-time applications, such as when DNNs are deployed at mobile devices for real-time image analysis. Other research has focused on the analysis of blur metrics consistent to a human's perception. While these research topics are attractive for many users, the perception consistency provides insignificant help with the DNN algorithms associated with extra computational expenses. In this regard, existing resolution assessment algorithms do not provide techniques for fast resolution assessment (e.g., resolution assessment that can be performed in milliseconds on mobile devices) and yield reasonably accurate resolution assessment metrics.

Techniques disclosed herein can be used to address the obstacles caused by image blur associated with existing resolution assessment algorithms. More specifically, techniques disclosed herein can be used for dynamic image resolution assessment prior to DNN processing (e.g., by a DNN application executing on a computing device) of video data, such as real-time streaming videos. Image resolution assessment techniques disclosed herein use sparse windowed Fourier transforms to analyze the localized frequency characteristics of a digital image (e.g., an image from a video stream). Several different image sampling patterns can be used to sample the digital image and select image chips of fixed size (e.g., rectangular image portions) from the image for analysis. As used herein, the term "image chip" refers to an image portion (e.g., a rectangular image portion) of a digital image.

The image chips are multiplied with a Gaussian window, which keeps the centers of the chips unchanged and dims the chips away from their centers. The application of the Gaussian windows avoids the disturbance from the strong high-frequency signals caused by the chip boundaries. Then a DFT is applied to individual chips to calculate 2D energy spectrum for each of the chips. The 2D energy spectrum represents the energy distribution of various frequencies along various directions. The energy in 2D space is projected onto 1D omni-frequency space by accumulating the 2D energy with the same polar radius to obtain 1D energy distribution. This process is accelerated by folding the 2D energy spectrum vertically and then horizontally using a "paper folding" technique as discussed herein. Next, a single metric of image resolution is obtained at each sampling location (i.e., for each image chip) by thresholding the 1D energy distribution. The final metric of the image resolution is calculated as the maximum of the image resolution metrics calculated for all sampling locations (or image chips), which is in the range of [0, 1). Because DFT can be calculated at small scales and spectral analyses over different areas can be conducted in parallel, the disclosed techniques can be performed simultaneously on multiple image chips (to more accurately assess image resolution) to capture sharp features that may appear in portions of the image, and a final image resolution assessment can be executed in milliseconds independent of the image size.

Since blurry videos and images are common on the Internet, it is important to develop techniques for image resolution assessment, so that DNNs can be deployed on mobile devices to effectively process real-time data streams. The following are distinctive features of the presently-disclosed techniques for image resolution assessment, which are not present in existing (prior art) techniques: (a) quick image resolution assessment based on parallel sparse windowed Fourier transforms applied to multiple image chips selected via one of a set of unique sampling patterns; (b) four sampling patterns for image sampling, which can be used for image resolution assessment; and (c) a "paper folding" technique to determine 1D omni-energy spectrum where 2D energy spectrum is folded horizontally and vertically to significantly shorten the 1D energy spectrum calculations and provide efficient image resolution determination for implementing DNN processing at mobile devices.

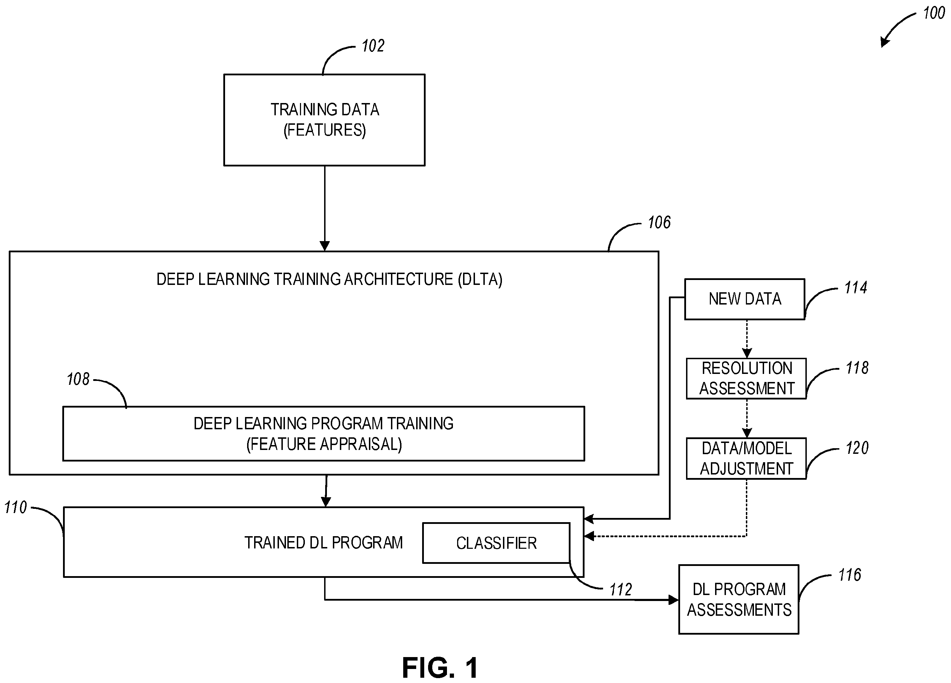

FIG. 1 is a block diagram 100 illustrating the training of a deep learning (DL) program 110 using a DL training architecture (DLTA) with data or neural network model adjustment based on image resolution, according to some example embodiments. In some example embodiments, machine-learning programs (MLPs), including deep learning programs, also collectively referred to as machine-learning algorithms or tools, are utilized to perform operations associated with correlating data or other artificial intelligence (AI)-based functions.

As illustrated in FIG. 1, deep learning program training 108 can be performed within the deep-learning training architecture (DLTA) 106 based on training data 102 (which can include features). During the deep learning program training 108, features from the training data 102 can be assessed for purposes of further training of the DL program. The DL program training 108 results in a trained DL program 110 which can include one or more classifiers 112 that can be used to provide assessments 116 based on new data 114.

Deep learning is part of machine learning, a field of study that gives computers the ability to learn without being explicitly programmed. Machine learning explores the study and construction of algorithms, also referred to herein as tools, that may learn from existing data, correlate data, and make predictions about new data. Such machine learning tools operate by building a model from example training data (e.g., 102) in order to make data-driven predictions or decisions expressed as outputs or deep learning program assessments 116. Although example embodiments are presented with respect to a few machine-learning tools (e.g., a deep learning training architecture), the principles presented herein may be applied to other machine learning tools.

In some example embodiments, different machine learning tools may be used. For example, Logistic Regression (LR), Naive-Bayes, Random Forest (RF), neural networks (NN), matrix factorization, and Support Vector Machines (SVM) tools may be used during the program training process 108 (e.g., for correlating the training data 102).

Two common types of problems in machine learning are classification problems and regression problems. Classification problems, also referred to as categorization problems, aim at classifying items into one of several category values (for example, is this object an apple or an orange?). Regression algorithms aim at quantifying some items (for example, by providing a value that is a real number). In some embodiments, the DLTA 106 can be configured to use machine learning algorithms that utilize the training data 102 to find correlations among identified features that affect the outcome.

The machine learning algorithms utilize features from the training data 102 for analyzing the new data 114 to generate the assessments 116. The features include individual measurable properties of a phenomenon being observed and used for training the ML program. The concept of a feature is related to that of an explanatory variable used in statistical techniques such as linear regression. Choosing informative, discriminating, and independent features are important for the effective operation of the MLP in pattern recognition, classification, and regression. Features may be of different types, such as numeric features, strings, and graphs. In some aspects, training data can be of different types, with the features being numeric for use by a computing device.

In some aspects, the features used during the DL program training 108 can include one or more of the following: sensor data from a plurality of sensors (e.g., audio, motion, image sensors); actuator event data from a plurality of actuators (e.g., wireless switches or other actuators); external information source from a plurality of external sources; timer data associated with the sensor state data (e.g., time sensor data is obtained), the actuator event data, or the external information source data; user communications information; user data; user behavior data, and so forth.

The machine learning algorithms utilize the training data 102 to find correlations among the identified features that affect the outcome of assessments 116. In some example embodiments, the training data 102 includes labeled data, which is known data for one or more identified features and one or more outcomes. With the training data 102 (which can include identified features), the DL program is trained using the DL program training 108 within the DLTA 106. The result of the training is the trained DL program 110. When the DL program 110 is used to perform an assessment, new data 114 is provided as an input to the trained DL program 110, and the DL program 110 generates the assessments 116 as an output.

In some aspects, new data 114 (which can include real-time streaming data) can be processed using one or more of the techniques disclosed herein to perform image resolution assessments 118. Image data or neural network model adjustments 120 can be performed based on the assessed image resolution. For example, if the image resolution associated with the new data 114 is assessed to be at or below a threshold resolution value, one or more video characteristics of the new data 114 can be adjusted to match video characteristics used for training the DL program 110. In some aspects, the video characteristics adjustment can include downsampling the new data 114 to create sharper images. In other aspects, the neural network model used by the DLTA 106 can be retrained using training data with a lower resolution that matches the assessed resolution of the new data, so that the model is better adapted for processing video data with the assessed resolution.

As used herein, the term "image resolution" indicates the resolution of an image as determined based on the sampling frequency of the image. According to the Nyquist-Shannon sampling theorem, for a given sample rate fs of a discrete signal processing system, a perfect signal reconstruction is guaranteed possible if the original signal contains no sinusoidal component at (or higher) than the Nyquist frequency B = fs/2. The Nyquist frequency B is, therefore, the upper bound of a sampling frequency that a digital image can represent. A digital image sampled from a two-dimensional (2D) continuous signal at the highest image sampling frequency f, where f = B, is referred to as a "full-resolution image." A digital image sampled from a 2D continuous signal at the highest image sampling frequency of f = B/2 is referred to as a "half-resolution image." The resolution of a digital image can, therefore, be defined as r = f/B, where $r \in [0, 1)$, f is the image sampling frequency, and B is the Nyquist frequency. In this context, the image resolution is distinguished from image size, which is represented by the number of pixels.

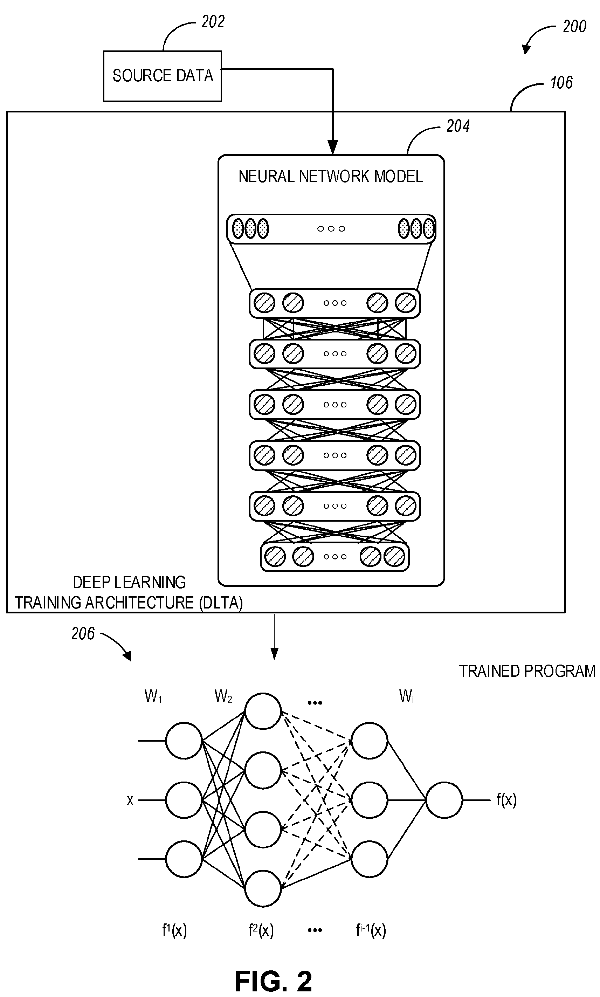

FIG. 2 is a diagram 200 illustrating the generation of a trained DL program 206 using a neural network model 204 trained within a DLTA 106, according to some example embodiments. Referring to FIG. 2, source data 202 can be analyzed by a neural network model 204 (or another type of a machine learning algorithm or technique) to generate the trained DL program 206 (which can be the same as the trained DL program 110). The source data 202 can include a training set of data, such as 102, including data identified by one or more features. As used herein, the terms "neural network" and "neural network model" are interchangeable.

Machine learning techniques train models to accurately make predictions on data fed into the models (e.g., what was said by a user in a given utterance; whether a noun is a person, place, or thing; what the weather will be like tomorrow). During a learning phase, the models are developed against a training dataset of inputs to optimize the models to correctly predict the output for a given input. Generally, the learning phase may be supervised, semi-supervised, or unsupervised; indicating a decreasing level to which the "correct" outputs are provided in correspondence to the training inputs. In a supervised learning phase, all of the outputs are provided to the model and the model is directed to develop a general rule or algorithm that maps the input to the output. In contrast, in an unsupervised learning phase, the desired output is not provided for the inputs so that the model may develop its own rules to discover relationships within the training dataset. In a semi-supervised learning phase, an incompletely labeled training set is provided, with some of the outputs known and some unknown for the training dataset.

Models may be run against a training dataset for several epochs, in which the training dataset is repeatedly fed into the model to refine its results (i.e., the entire dataset is processed during an epoch). During an iteration, the model (e.g., a neural network model or another type of machine learning model) is run against a mini-batch (or a portion) of the entire dataset. In a supervised learning phase, a model is developed to predict the output for a given set of inputs (e.g., source data 202) and is evaluated over several epochs to more reliably provide the output that is specified as corresponding to the given input for the greatest number of inputs for the training dataset. In another example, for an unsupervised learning phase, a model is developed to cluster the dataset into n groups and is evaluated over several epochs as to how consistently it places a given input into a given group and how reliably it produces the n desired clusters across each epoch.

Once an epoch is run, the models are evaluated, and the values of their variables (e.g., weights, biases, or other parameters) are adjusted to attempt to better refine the model in an iterative fashion. As used herein, the term "weights" is used to refer to the parameters used by a machine learning model. During a backward computation, a model can output gradients, which can be used for updating weights associated with a forward computation. As used herein, the terms "forward computation" and "backward computation" refer to computations performed in connection with the training of a neural network model (or another type of model). The computations performed in a current iteration during forward and backward computations modify weights based on results from prior iterations (e.g., based on gradients generated at a conclusion of a prior backward computation). In a distributed synchronous training environment for deep neural networks, gradient aggregations, averaging, and distribution among worker machines for purposes of neural network model weights update (i.e., gradient synchronization) can run sequentially with backpropagation (i.e., neural network model layer processing during backward computation).

In various aspects, the evaluations are biased against false negatives, biased against false positives, or evenly biased with respect to the overall accuracy of the model. The values may be adjusted in several ways depending on the machine learning technique used. For example, in a genetic or evolutionary algorithm, the values for the models that are most successful in predicting the desired outputs are used to develop values for models to use during the subsequent epoch, which may include random variation/mutation to provide additional data points. One of ordinary skill in the art will be familiar with several other machine learning algorithms that may be applied with the present disclosure, including linear regression, random forests, decision tree learning, neural networks, deep neural networks, etc.

Each model develops a rule or algorithm over several epochs by varying the values of one or more variables affecting the inputs to more closely map to the desired result, but as the training dataset may be varied, and is preferably very large, perfect accuracy and precision may not be achievable. A number of epochs that make up a learning phase, therefore, may be set as a given number of trials or a fixed time/computing budget, or may be terminated before that number/budget is reached when the accuracy of a given model is high enough or low enough or an accuracy plateau has been reached. For example, if the training phase is designed to run n epochs and produce a model with at least 95% accuracy, and such a model is produced before the $n^{th}$ epoch, the learning phase may end early and use the produced model satisfying the end-goal accuracy threshold. Similarly, if a given model is not accurate enough to satisfy a random chance threshold, the learning phase for that model may be terminated early, although other models in the learning phase may continue training. Similarly, when a given model continues to provide similar accuracy or vacillate in its results across multiple epochs - having reached a performance plateau - the learning phase for the given model may terminate before the epoch number/computing budget is reached.

Once the learning phase is complete, the models are finalized. In some example embodiments, models that are finalized are evaluated against testing criteria. In a first example, a testing dataset that includes known outputs for its inputs is fed into the finalized models to determine an accuracy of the model in handling data that has not been trained on. In a second example, a false positive rate or false negative rate may be used to evaluate the models after finalization. In a third example, a delineation between data clusters in each model is used to select a model that produces the clearest bounds for its clusters of data.

In some example embodiments, the DL program 206 is trained by a neural network 204 (e.g., deep learning, deep convolutional, or recurrent neural network), which comprises a series of "neurons," such as Long Short Term Memory (LSTM) nodes, arranged into a network. A neuron is an architectural element used in data processing and artificial intelligence, particularly machine learning, that includes memory that may determine when to "remember" and when to "forget" values held in that memory based on the weights of inputs provided to the given neuron. Each of the neurons used herein is configured to accept a predefined number of inputs from other neurons in the network to provide relational and sub-relational outputs for the content of the frames being analyzed. Individual neurons may be chained together and/or organized into tree structures in various configurations of neural networks to provide interactions and relationship learning modeling for how each of the frames in an utterance is related to one another.

For example, an LSTM serving as a neuron includes several gates to handle input vectors (e.g., phonemes from an utterance), a memory cell, and an output vector (e.g., contextual representation). The input gate and output gate control the information flowing into and out of the memory cell, respectively, whereas forget gates optionally remove information from the memory cell based on the inputs from linked cells earlier in the neural network. Weights and bias vectors for the various gates are adjusted over the course of a training phase, and once the training phase is complete, those weights and biases are finalized for normal operation. One of skill in the art will appreciate that neurons and neural networks may be constructed programmatically (e.g., via software instructions) or via specialized hardware linking each neuron to form the neural network.

Neural networks utilize features for analyzing the data to generate assessments (e.g., recognize units of speech). A feature is an individual measurable property of a phenomenon being observed. The concept of the feature is related to that of an explanatory variable used in statistical techniques such as linear regression. Further, deep features represent the output of nodes in hidden layers of the deep neural network.

A neural network (e.g., 204), sometimes referred to as an artificial neural network or a neural network model, is a computing system based on consideration of biological neural networks of animal brains. Such systems progressively improve performance, which is referred to as learning, to perform tasks, typically without task-specific programming. For example, in image recognition, a neural network may be taught to identify images that contain an object by analyzing example images that have been tagged with a name for the object and, having learned the object and name, may use the analytic results to identify the object in untagged images. A neural network is based on a collection of connected units called neurons, where each connection, called a synapse, between neurons, can transmit a unidirectional signal with an activating strength that varies with the strength of the connection. The receiving neuron can activate and propagate a signal to downstream neurons connected to it, typically based on whether the combined incoming signals, which are from potentially many transmitting neurons, are of sufficient strength, where strength is a parameter.

A deep neural network (DNN) is a stacked neural network, which is composed of multiple layers. The layers are composed of nodes, which are locations where computation occurs, loosely patterned on a neuron in the human brain, which fires when it encounters sufficient stimuli. A node combines input from the data with a set of coefficients, or weights, that either amplify or dampen that input, which assigns significance to inputs for the task the algorithm is trying to learn. These input-weight products are summed, and the sum is passed through what is called a node's activation function, to determine whether and to what extent that signal progresses further through the network to affect the ultimate outcome. A DNN uses a cascade of many layers of non-linear processing units for feature extraction and transformation. Each successive layer uses the output from the previous layer as input. Higher-level features are derived from lower-level features to form a hierarchical representation. The layers following the input layer may be convolution layers that produce feature maps that are filtering results of the inputs and are used by the next convolution layer.

In training of a DNN architecture, a regression, which is structured as a set of statistical processes for estimating the relationships among variables, can include minimization of a cost function. The cost function may be implemented as a function to return a number representing how well the neural network performed in mapping training examples to correct output. In training, if the cost function value is not within a predetermined range, based on the known training images, backpropagation is used, where backpropagation is a common method of training artificial neural networks that are used with an optimization method such as stochastic gradient descent (SGD) method.

Use of backpropagation can include propagation and weight update. When an input is presented to the neural network, it is propagated forward through the neural network, layer by layer, until it reaches the output layer. The output of the neural network is then compared to the desired output, using the cost function, and an error value is calculated for each of the nodes in the output layer. The error values are propagated backward, starting from the output, until each node has an associated error value which roughly represents its contribution to the original output. Backpropagation can use these error values to calculate the gradient of the cost function with respect to the weights in the neural network. The calculated gradient is fed to the selected optimization method to update the weights to attempt to minimize the cost function.

Even though the training architecture 106 is referred to as a deep learning training architecture using a neural network model (and the program that is trained is referred to as a trained deep learning program, such as 110 or 206), the disclosure is not limited in this regard and other types of machine learning training architectures may also be used for model training.

In some aspects, the deep learning program (e.g., 110 or 206) can be used in connection with the video data processing (e.g., object recognition including facial recognition) and can be retrained based on image resolution data assessed in real time, using one or more of the techniques disclosed herein. In some aspects, retraining of the deep learning program or adjusting of video characteristics (such as downsampling) of the incoming video data can be performed based on different thresholds associated with the assessed image resolution.

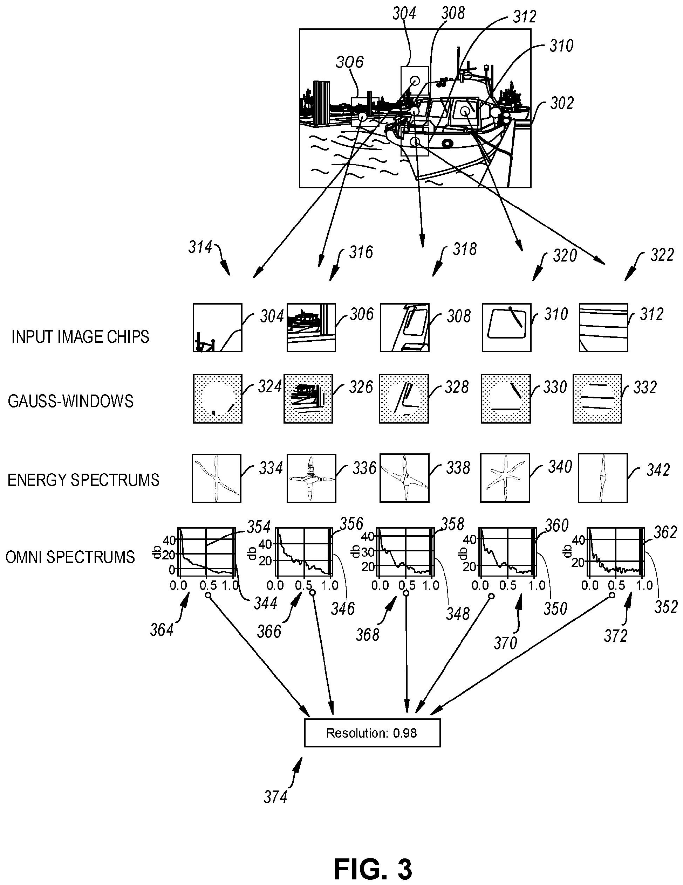

FIG. 3 is a diagram illustrating image resolution assessment 300 using parallel processing on multiple image chips, according to some example embodiments. Referring to FIG. 3, the image resolution assessment 300 can be performed dynamically on a mobile device (e.g., while the device is receiving real-time video data), to assess the resolution of one or more images within the video data. The image resolution assessment may include processing chains 314-322, with each chain applying a Gaussian window on an input image chip (e.g., 304 - 312) to obtain a processed image chip (e.g., 324-332), a two-dimensional (2D) energy spectrum (e.g., 334-342), and a 1D omni energy spectrum (e.g., 344-352). A final resolution assessment 374 is obtained based on the 1D omni energy spectrums 344-352, as described in greater detail hereinbelow.

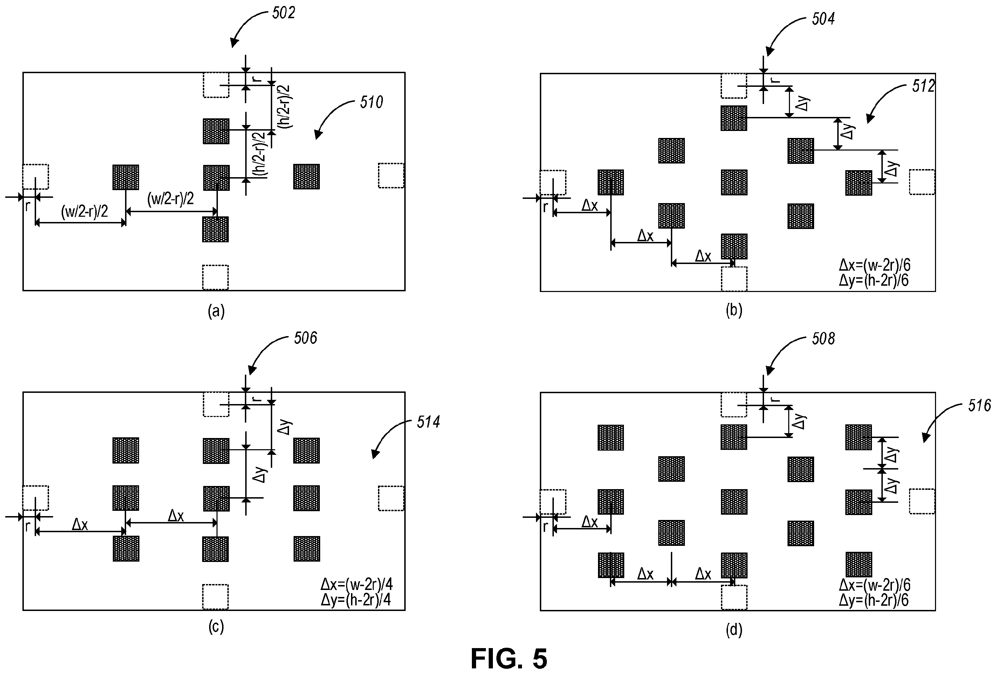

For example, image 302 can be part of a data stream received by a computing device using a DNN for performing image processing. A sampling pattern can be applied to image 302 to obtain image chips 304, 306, 308, and 310. In the particular example illustrated in FIG. 3, a five-point diamond sampling pattern is applied but other sampling patterns can also be used (e.g., one of the patterns illustrated in FIG. 5). Even though the image chips 304 - 312 may be taken from a color image, in some aspects the entire image 302 (or the image chips) can be converted to a black-and-white image (or image chips) prior to the start of processing chains 314, 316, 318, 320, and 322 for each of the corresponding image chips.

In some aspects, each of the image chips 304 - 312 is of rectangular shape (e.g., a square) with a predetermined size. As initial processing step in each of the processing chains 314 - 322, each of the image chips 304 - 312 is multiplied element-by-element with a Gaussian window, which has 1 at the center and tampers away from the center, to obtain processed image chips 324, 326, 328, 330, and 332 respectively. The application of Gaussian windows keeps the centers of the chips unchanged, dims the chips away from their centers, and avoids the disturbance from the strong high-frequency signals caused by the chip boundaries. Additionally, since Gaussian windows are applied only to a limited number of image chips, and not the entire image, such application can be referred to as a sparse application of Gaussian windows.

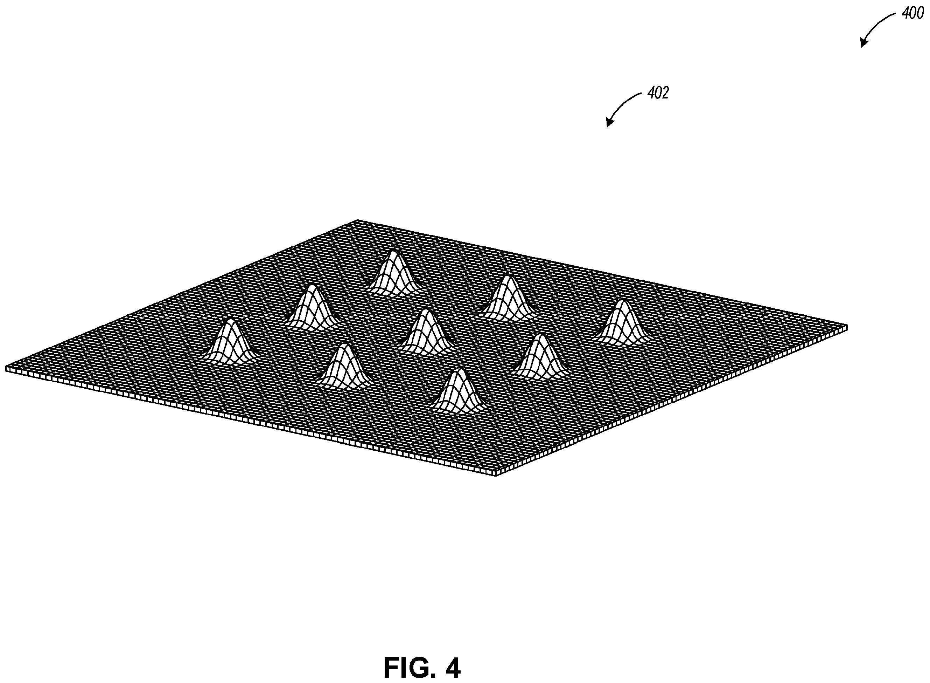

FIG. 4 is a diagram 400 illustrating a sparse application of Gaussian windows on image chips in connection with image resolution assessment, according to some example embodiments. Referring to FIG. 4, there is illustrated a sparse application of Gaussian windows on nine image chips within a digital image, resulting in a molehill representation 402 of the processed image chips after the Gaussian windows application.

FIG. 5 is a diagram illustrating different sampling patterns 502, 504, 506, and 508 that can be used for selecting image chips within an image in connection with image resolution assessment, according to some example embodiments.

Due to the finite aperture of cameras, an image is usually sharp at the areas in focus and blurry to a different extent elsewhere. When a photo/video is taken, a photographer usually focuses the lens on the main subjects and puts them in the central areas of the frame. Based on these observations, sampling patterns 502, 504, 506, and 508 can be used in connection with image resolution assessment techniques disclosed herein. The sampling patterns 502 - 508 are designed to capture significant image subjects with a minimal number of samples (or image chips). Based on streaming video analyses, the locations at which image subjects most frequently appear are around the image center as well as 1/3 to the left, right, top and bottom of the image. These areas are well covered by the nine-point diamond and thirteen-point square patterns, as shown in image patterns 504 (with image chips 512) and 508 (with image chips 516).

When working with extremely low computational budgets, the image sampling scheme can be reduced to five-point diamond and nine-point square, as shown in image patterns 502 (with image chips 510) and 506 (with image chips 514). Instead of distributing the points at the center and 1/3 (of image height and width) locations, the peripheral sampling points are placed at around the 1/4 (of image height and width) locations. The 1/4 scheme distributes the image chips more evenly over the image and covers more areas than the 1/3 scheme. Additionally, many images include edges, corners, and other sharp features at around the 1/4 locations.

In some aspects, each image chip of the image chips 510, 512, 514, and 516 has an equal square shape. In some aspects, the location of each image chip of the image chips 510, 512, 514, and 516 can be determined based on the image height (e.g., h pixels) and the image width (e.g., w pixels) as indicated in FIG. 5. In some aspects, since Fourier transformations can be used in connection with image resolution assessment and since such Fourier transformations are particularly efficient when the input image size is a product of 2's, 3's, and 5's, the chip size can be set at, e.g., 64, 81, 125, 128, etc., according to the actual application. In some aspects, some of the image chips may overlap with each other.

Referring again to FIG. 3, after the Gaussian windows are applied and processed image chips 324, 326, 328, 330, 332 are generated within processing chains 314, 316, 318, 320, and 322 respectively, a digital Fourier transform (DFT) (e.g., a fast Fourier transform (FFT)) is applied to the processed image chips to calculate 2D energy spectrums 334, 336, 338, 340, and 342 respectively. The 2D energy spectrum represents the energy distribution of various frequencies along various directions within each processed image chip.

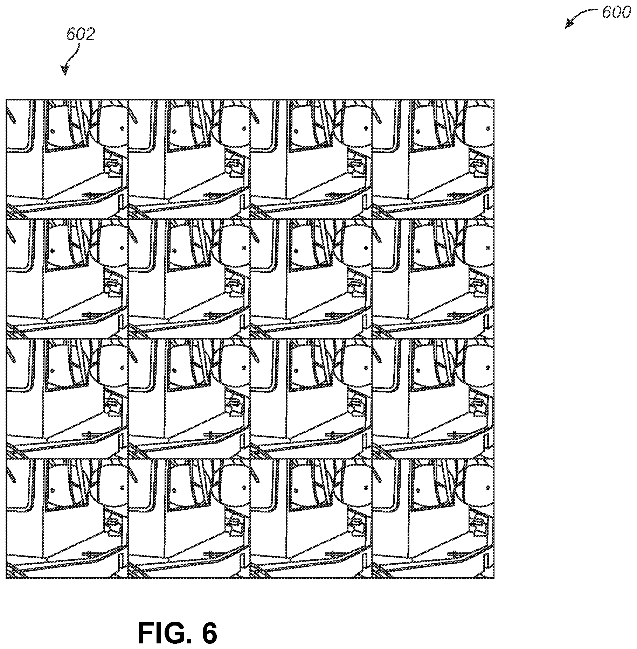

DFT application presumes that the image has infinite dimensions and is composed of the replications of the input image chip along the vertical and horizontal directions, as illustrated in FIG. 6.

FIG. 6 illustrates image replication 600 during a discrete Fourier transformation in connection with image resolution assessment, according to some example embodiments. More specifically, image chip 602 can be replicated multiple times in horizontal and vertical directions, as illustrated in FIG. 6, prior to the DFT application.

The replication creates artificial vertical and horizontal edges along the image chip boundaries. The artificial edges would cause strong fake energy at the high-frequency area in the frequency domain, which overwhelms the true image energy in many cases.

In some aspects, the application of the Gaussian windows to image chips 304 - 312 can be represented as follows:

$$I_{win}(i, j) = I(i, j) \cdot G(i, j), \text{ where } G(i, j) = e^{\frac{(i-\mu)^2+(j-\mu)^2}{-2\sigma^2}}, \mu = \frac{k-1}{2},$$

and

$$\sigma = \frac{k}{6},$$

if the image chip size is $k \times k$ pixels.

The Gaussian window application has a property that the Fourier transform of a Gaussian function is another Gaussian function, which acts as a low pass filter in the frequency domain that blurs the frequency spectrum slightly and does not interfere with the spectral analyses. After applying a Gaussian window to each of the image chips, a 2D FFT is performed on the image chip to determine the chip's 2D energy spectrum (e.g., F(u, v) at a location (u, v)), which has a real number at each pixel. A logarithm transformation E(u, v) of the 2D energy spectrum F(u, v) is determined as follows, to brighten the high-frequency signals: $E(u, v) = 10 \cdot log_{10}{}^{F(u,v)}/0.0000 \cdot$

The 2D energy spectrum 334 - 342 for image chips 304 - 312 is projected into 1D frequency space by accumulating the energy with the same polar radius, to obtain 1D omni energy spectrums 344, 346, 348, 350, and 352 for image chips 304 - 312 respectively.

The value of a point in the energy spectrum $E (u, v)$ at $(u, v)$ stands for the energy at the frequency $f = \sqrt{u^2 + v^2}$ along the direction $\vec{d} = \frac{\overrightarrow{(u,v)}}{\sqrt{u^2+v^2}}$. When the image resolution is concerned, the direction is inconsequential. In this regard, the 2D energy spectrum is converted to 1D omni energy spectrum (e.g., representations 344 - 352) by accumulating the energy at different directions (i.e., omni-directional accumulation), as follows: $E(f) = \sum_{u,v \ni f=\sqrt{u^2+v^2}} E(u, v)$, where $E(f)$ is the 1D omni energy spectrum illustrated by the representations 344 - 352.

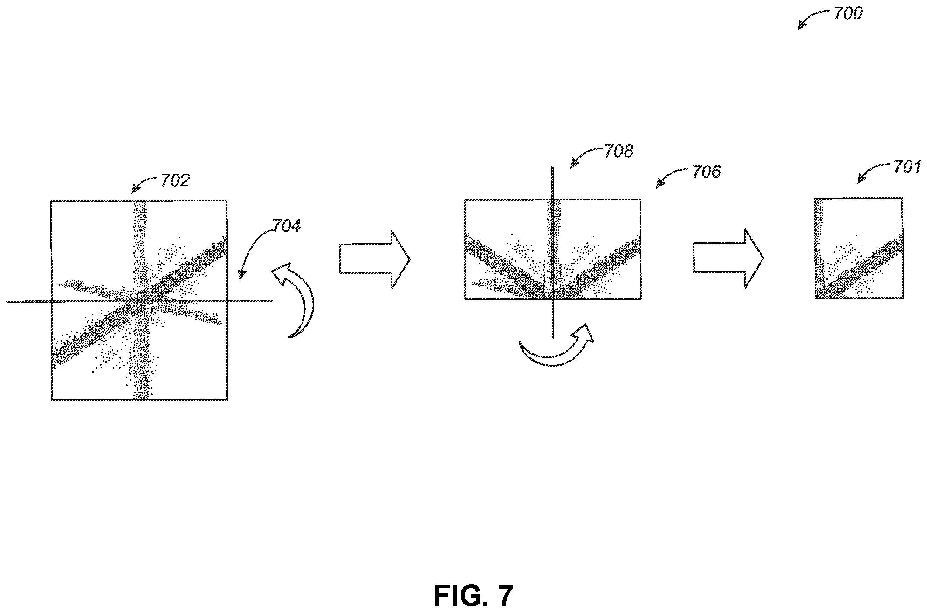

Since the above equation for determining $E(f)$ involves resource-intensive multiplication and square root calculations, the $E(f)$ determination process can be performed faster by using a "paper folding" technique (e.g., by folding the 2D spectrum vertically and summing up the corresponding values). The same "paper folding" process is repeated horizontally, as illustrated in FIG. 7. Finally, the accumulation and determination of $E(f)$ can be conducted efficiently in only one of the four quadrants of the 2D energy spectrums.

FIG. 7 illustrates a "paper folding" technique 700 for accelerating 1D omnidirectional spectrum calculation in connection with image resolution assessment, according to some example embodiments. Referring to FIG. 7, the 2D energy spectrum 702 calculated for an image chip can be folded vertically across a horizontal axis (or x-axis) 704 resulting in 2D energy spectrum 706. During the folding, 2D energy values of pixels that are symmetric along the x-axis 704 are summed and the summed value is represented within the 2D energy spectrum 706. The "paper folding" technique 700 continues by folding the 2D energy spectrum 706 horizontally across a vertical (or y-axis) 708 resulting in 2D energy spectrum 701 (which is one-quarter of the size of the 2D energy spectrum 702). During the folding along the y-axis 708, 2D energy values of pixels that are symmetric along the y-axis 708 are summed and the summed value is represented within the 2D energy spectrum 701. A 1D omni energy spectrum calculation can then be performed on the reduced size 2D energy spectrum 701 rather than the full-size 2D energy spectrum 702, resulting in faster image resolution assessment.

Referring again to FIG. 3, each of the 1D omni energy spectrums 344 - 352 is defined based on a relation between the image energy in the frequency domain (measured in decibel (or dB) along the y-axis) and the image resolution (represented with values between 0 and 1 along the x-axis). Each of the 1D omni energy spectrums can be thresholded by applying corresponding thresholds 354, 356, 358, 360, and 362 at 0dB of image energy. More specifically, each of the thresholds 354 - 362 can be applied to intersect the one the omni energy spectrums at a point corresponding to 0dB of image energy. The image resolution value 364, 366, 368, 370, 372 for the corresponding image chips 304 - 312 is obtained as the intersection point of each threshold with the x-axis of the 1D omni energy spectrums 344 - 352. A final image resolution 374 is determined as the maximum of all image resolution values 364 - 372 calculated for image chips 304 - 312, with the final image resolution 374 being within the range of [0; 1).

In some aspects, processing chains 314 - 322 can be performed in parallel after the image chips are determined based on the sampling pattern. Since Fourier analyses are conducted locally in different areas, the disclosed image resolution techniques are accurate. Additionally, since DFT can be calculated very efficiently at small scales and spectral analyses over different areas are conducted in parallel (e.g., processing chains 314 - 322), the image resolution assessment techniques disclosed herein can be executed in milliseconds independent of the image size.

After the final data image resolution is determined, neural network processing of the image can be optimized by retraining the neural network model or changing one or more characteristics of the video stream with the image. For example, if the image resolution is determined to be lower than a threshold value, the video stream can be downsampled to create sharper images so that a neural network trained on high-resolution images can still be applied. As an alternative, the neural network model can be retrained based on the obtained final resolution of the image within the video stream.

In some aspects, if the resolution of images/videos is estimated using techniques disclosed herein, the images/videos can be downsampled without information loss to save storage space and reduce the streaming cost. Some web services require that the uploaded images/videos have a minimum resolution for quality control. In this case, techniques disclosed herein can be used to detect the resolution of the images/videos and filter out the intentionally upsampled "fake" high-resolution images/videos (i.e., images/videos that are not high-resolution but have been upsampled to produce the impression of being high-resolution). Existing images/videos can also be cataloged in a library/database according to their actual resolutions detected using the disclosed techniques.

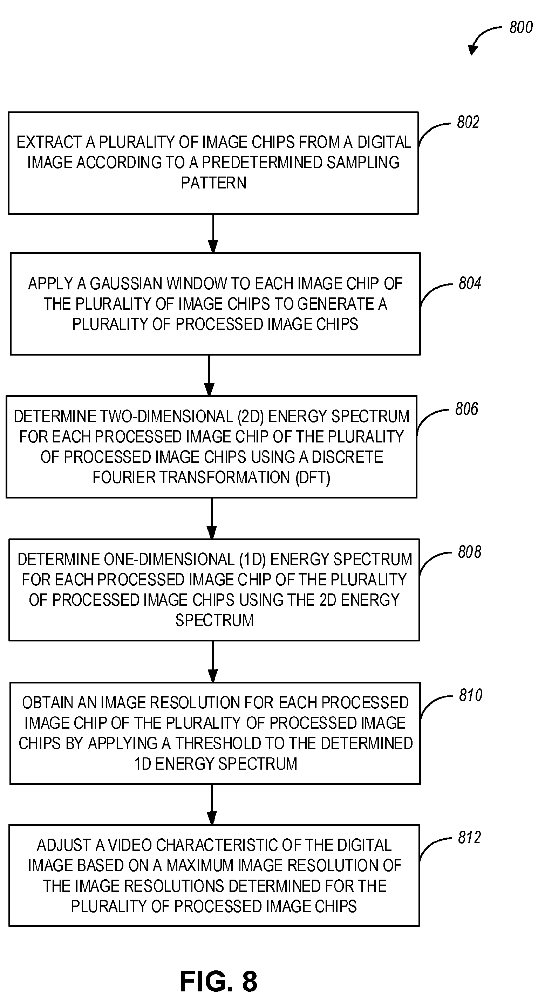

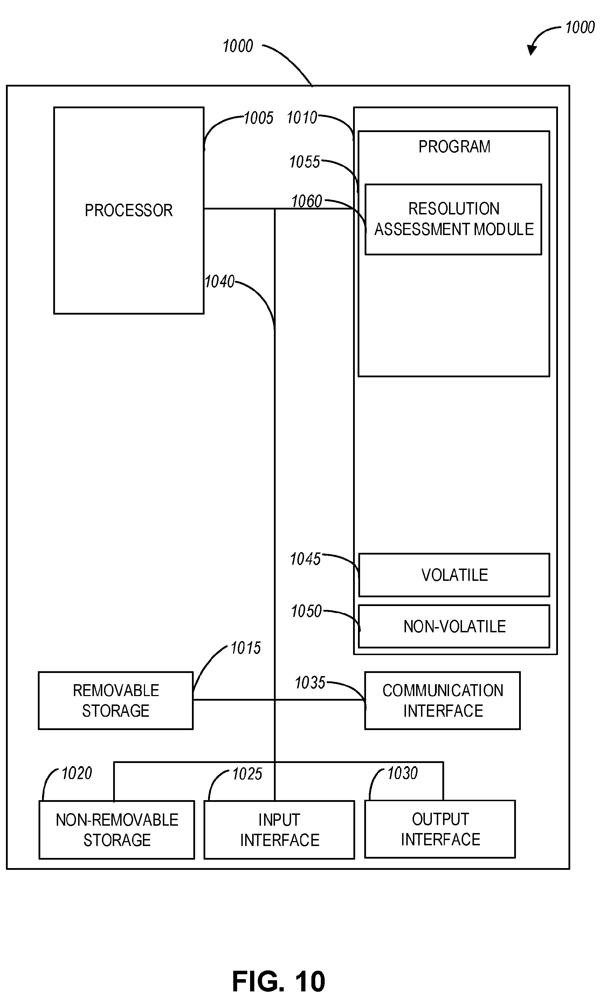

FIG. 8 illustrates a flowchart of image resolution assessment, according to some example embodiments. The method 800 includes operations 802, 804, 806, 808, 810, and 812. By way of example and not limitation, the method 800 is described as being performed by a resolution assessment module within a computing device, such as the resolution assessment module 1060 within the computing device 1000 of FIG. 10.

At operation 802, a plurality of image chips is extracted from a digital image according to a predetermined sampling pattern. For example, the resolution assessment module 1060 can extract image chips 304 - 312 from image 302 using a predefined five-point sampling pattern. At operation 804, a Gaussian window is applied to each image chip of the plurality of image chips to generate a plurality of processed image chips. For example, the resolution assessment module 1060 can apply Gaussian windows to image chips 304 - 312 to generate processed image chips 324 - 332 as illustrated in FIG. 3.

At operation 806, the 2D energy spectrum is determined for each processed image chip of the plurality of processed image chips using a DFT. For example, 2D energy spectrums 334 - 342 for the processed image chips 324 - 332 are determined using a DFT. At operation 808, the 1D energy spectrum is determined for each processed image chip of the plurality of processed image chips using the determined 2D energy spectrum. For example, the resolution assessment module 1060 determines 1D omni energy spectrums 344 - 342 corresponding to the 2D energy spectrums 334 - 342 associated with image chips 304 - 312. At operation 810, the 1D energy spectrum is compared to a threshold to obtain an image resolution for each processed image chip of the plurality of processed image chips. For example, the resolution assessment module 1060 applies thresholds 354 - 362 at 0dB image energy of the 1D omni energy spectrums to determine image resolutions 364 - 372 for corresponding image chips 304 - 312. At operation 812, a video characteristic of the digital image is adjusted based on a maximum image resolution of the image resolutions determined for the plurality of processed image chips. For example, the resolution assessment module 1060 can downsampled the image 302 or cause retraining of the neural network model based on the determined image resolution 374, which is selected as the maximum resolution from the image resolutions 364 - 372.

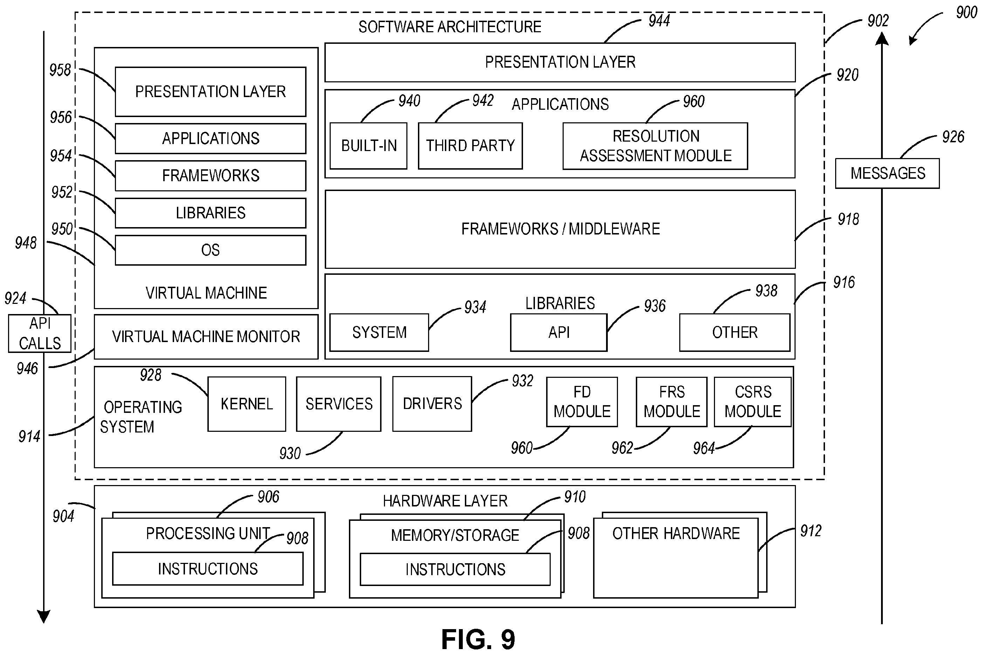

FIG. 9 is a block diagram illustrating a representative software architecture 900, which may be used in conjunction with various device hardware described herein, according to some example embodiments. FIG. 9 is merely a non-limiting example of a software architecture 902 and it will be appreciated that many other architectures may be implemented to facilitate the functionality described herein. The software architecture 902 may be executing on hardware such as device 1000 of FIG. 10 that includes, among other things, processor 1005, memory 1010, storage 1015 and 1020, and I/O components 1025 and 1030.

A representative hardware layer 904 is illustrated and can represent, for example, the device 1000 of FIG. 10. The representative hardware layer 904 comprises one or more processing units 906 having associated executable instructions 908. Executable instructions 908 represent the executable instructions of the software architecture 902, including implementation of the methods, modules and so forth of FIGS. 1-8. Hardware layer 904 also includes memory and/or storage modules 910, which also have executable instructions 908. Hardware layer 904 may also comprise other hardware 912, which represents any other hardware of the hardware layer 904, such as the other hardware illustrated as part of device 1000.

In the example architecture of FIG. 9, the software architecture 902 may be conceptualized as a stack of layers where each layer provides particular functionality. For example, the software architecture 902 may include layers such as an operating system 914, libraries 916, frameworks/middleware 918, applications 920, and presentation layer 944. Operationally, the applications 920 and/or other components within the layers may invoke application programming interface (API) calls 924 through the software stack and receive a response, returned values, and so forth illustrated as messages 926 in response to the API calls 924. The layers illustrated in FIG. 9 are representative in nature and not all software architectures 902 have all layers. For example, some mobile or special purpose operating systems may not provide frameworks/middleware 918, while others may provide such a layer. Other software architectures may include additional or different layers.

The operating system 914 may manage hardware resources and provide common services. The operating system 914 may include, for example, a kernel 928, services 930, and drivers 932. The kernel 928 may act as an abstraction layer between the hardware and the other software layers. For example, kernel 928 may be responsible for memory management, processor management (e.g., scheduling), component management, networking, security settings, and so on. The services 930 may provide other common services for the other software layers. The drivers 932 may be responsible for controlling or interfacing with the underlying hardware. For instance, the drivers 932 may include display drivers, camera drivers, Bluetooth® drivers, flash memory drivers, serial communication drivers (e.g., Universal Serial Bus (USB) drivers), Wi-Fi® drivers, audio drivers, power management drivers, and so forth, depending on the hardware configuration.

The libraries 916 may provide a common infrastructure that may be utilized by the applications 920 and/or other components and/or layers. The libraries 916 typically provide functionality that allows other software modules to perform tasks in an easier fashion than to interface directly with the underlying operating system 914 functionality (e.g., kernel 928, services 930, and/or drivers 932). The libraries 916 may include system libraries 934 (e.g., C standard library) that may provide functions such as memory allocation functions, string manipulation functions, mathematic functions, and the like. In addition, the libraries 916 may include API libraries 936 such as media libraries (e.g., libraries to support presentation and manipulation of various media format such as MPEG4, H.264, MP3, AAC, AMR, JPG, PNG), graphics libraries (e.g., an OpenGL framework that may be used to render 2D and 3D in a graphic content on a display), database libraries (e.g., SQLite that may provide various relational database functions), web libraries (e.g., WebKit that may provide web browsing functionality), and the like. The libraries 916 may also include a wide variety of other libraries 938 to provide many other APIs to the applications 920 and other software components/modules.

The frameworks/middleware 918 (also sometimes referred to as middleware) may provide a higher-level common infrastructure that may be utilized by the applications 920 and/or other software components/modules. For example, the frameworks/middleware 918 may provide various graphical user interface (GUI) functions, high-level resource management, high-level location services, and so forth. The frameworks/middleware 918 may provide a broad spectrum of other APIs that may be utilized by the applications 920 and/or other software components/modules, some of which may be specific to a particular operating system 914 or platform.

The applications 920 include built-in applications 940, third-party applications 942, and a resolution assessment module 960. In some aspects, the resolution assessment module 960 comprises suitable circuitry, logic, interfaces and/or code and can be configured to perform one or more of the image resolution assessment functions discussed in connection with FIG. 3. For example, the resolution assessment module 960 can perform functionalities within each of the processing chains 314 - 322 in parallel. Even though the resolution assessment module 960 is illustrated as part of applications 920 the disclosure is not limited in this regard and the resolution assessment module 960 can be part of the operating system 914 of the software architecture 902.

Examples of representative built-in applications 940 may include but are not limited to, a contacts application, a browser application, a book reader application, a location application, a media application, a messaging application, and/or a game application. Third-party applications 942 may include any of the built-in applications 940 as well as a broad assortment of other applications. In a specific example, the third-party application 942 (e.g., an application developed using the Android™ or iOS™ software development kit (SDK) by an entity other than the vendor of the particular platform) may be mobile software running on a mobile operating system such as iOS™, Android™, Windows® Phone, or other mobile operating systems. In this example, the third-party application 942 may invoke the API calls 924 provided by the mobile operating system such as operating system 914 to facilitate functionality described herein.

The applications 920 may utilize built-in operating system functions (e.g., kernel 928, services 930, and drivers 932), libraries (e.g., system libraries 934, API libraries 936, and other libraries 938), and frameworks/middleware 918 to create user interfaces to interact with users of the system. Alternatively, or additionally, in some systems, interactions with a user may occur through a presentation layer, such as presentation layer 944. In these systems, the application/module "logic" can be separated from the aspects of the application/module that interact with a user.

Some software architectures utilize virtual machines. In the example of FIG. 9, this is illustrated by virtual machine 948. A virtual machine creates a software environment where applications/modules can execute as if they were executing on a hardware machine (such as the device 1000 of FIG. 10, for example). A virtual machine 948 is hosted by a host operating system (e.g., operating system 914) and typically, although not always, has a virtual machine monitor 946, which manages the operation of the virtual machine 948 as well as the interface with the host operating system (i.e., operating system 914). A software architecture 902 executes within the virtual machine 948 such as an operating system 950, libraries 952, frameworks/middleware 954, applications 956, and/or presentation layer 958. These layers of software architecture executing within the virtual machine 948 can be the same as corresponding layers previously described or may be different.

FIG. 10 is a block diagram illustrating circuitry for a device that implements algorithms and performs methods, according to some example embodiments. All components need not be used in various embodiments. For example, clients, servers, and cloud-based network devices may each use a different set of components, or in the case of servers, for example, larger storage devices.

One example computing device in the form of a computer 1000 (also referred to as computing device 1000, computer system 1000, or computer 1000) may include a processor 1005, memory storage 1010, removable storage 1015, non-removable storage 1020, input interface 1025, output interface 1030, and communication interface 1035, all connected by a bus 1040. Although the example computing device is illustrated and described as the computer 1000, the computing device may be in different forms in different embodiments.

The memory storage 1010 may include volatile memory 1045 and non-volatile memory 1050 and may store a program 1055. The computing device 1000 may include - or have access to a computing environment that includes - a variety of computer-readable media, such as the volatile memory 1045, the non-volatile memory 1050, the removable storage 1015, and the non-removable storage 1020. Computer storage includes random-access memory (RAM), read-only memory (ROM), erasable programmable read-only memory (EPROM), electrically erasable programmable read-only memory (EEPROM), flash memory or other memory technologies, compact disc read-only memory (CD ROM), digital versatile disks (DVD) or other optical disk storage, magnetic cassettes, magnetic tape, magnetic disk storage or other magnetic storage devices, or any other medium capable of storing computer-readable instructions.

Computer-readable instructions stored on a computer-readable medium (e.g., the program 1055 stored in the memory 1010) are executable by the processor 1005 of the computing device 1000. A hard drive, CD-ROM, and RAM are some examples of articles including a non-transitory computer-readable medium such as a storage device. The terms "computer-readable medium" and "storage device" do not include carrier waves to the extent that carrier waves are deemed too transitory. "Computer-readable non-transitory media" includes all types of computer-readable media, including magnetic storage media, optical storage media, flash media, and solid-state storage media. It should be understood that software can be installed in and sold with a computer. Alternatively, the software can be obtained and loaded into the computer, including obtaining the software through a physical medium or distribution system, including, for example, from a server owned by the software creator or from a server not owned but used by the software creator. The software can be stored on a server for distribution over the Internet, for example. As used herein, the terms "computer-readable medium" and "machine-readable medium" are interchangeable.

The program 1055 may utilize a customer preference structure using modules discussed herein, such as the resolution assessment module 1060. In some aspects, the resolution assessment module 1060 comprises suitable circuitry, logic, interfaces and/or code and can be configured to perform one or more of the image resolution assessment functions discussed in connection with FIG. 3. For example, the resolution assessment module 1060 can perform functionalities within each of the processing chains 314 - 322 in parallel, as well as the functionalities discussed in connection with FIG. 8.

Any one or more of the modules described herein may be implemented using hardware (e.g., a processor of a machine, an application-specific integrated circuit (ASIC), field-programmable gate array (FPGA), or any suitable combination thereof). Moreover, any two or more of these modules may be combined into a single module, and the functions described herein for a single module may be subdivided among multiple modules. Furthermore, according to various example embodiments, modules described herein as being implemented within a single machine, database, or device may be distributed across multiple machines, databases, or devices.

In some aspects, module 1060, as well as one or more other modules that are part of the program 1055, can be integrated as a single module, performing the corresponding functions of the integrated modules.

Although a few embodiments have been described in detail above, other modifications are possible within the scope of the following claims.

It should be further understood that software including one or more computer-executable instructions that facilitate processing and operations as described above with reference to any one or all of steps of the disclosure can be installed in and sold with one or more computing devices consistent with the disclosure. Alternatively, the software can be obtained and loaded into one or more computing devices, including obtaining the software through physical medium or distribution system, including, for example, from a server owned by the software creator or from a server not owned but used by the software creator. The software can be stored on a server for distribution over the Internet, for example.

Also, it will be understood by one skilled in the art that this disclosure is not limited in its application to the details of construction and the arrangement of components set forth in the description or illustrated in the drawings, but are limited only by the scope of the appended claims.

The components of the illustrative devices, systems, and methods employed in accordance with the illustrated embodiments can be implemented, at least in part, in digital electronic circuitry, analog electronic circuitry, or in computer hardware, firmware, software, or in combinations of them. These components can be implemented, for example, as a computer program product such as a computer program, program code or computer instructions tangibly embodied in an information carrier, or in a machine-readable storage device, for execution by, or to control the operation of, data processing apparatus such as a programmable processor, a computer, or multiple computers.

A computer program can be written in any form of programming language, including compiled or interpreted languages, and it can be deployed in any form, including as a stand-alone program or as a module, component, subroutine, or other units suitable for use in a computing environment. A computer program can be deployed to be executed on one computer or on multiple computers at one site or distributed across multiple sites and interconnected by a communication network. Also, functional programs, codes, and code segments for accomplishing the techniques described herein can be easily construed as within the scope of the claims by programmers skilled in the art to which the techniques described herein pertain. Method steps associated with the illustrative embodiments can be performed by one or more programmable processors executing a computer program, code or instructions to perform functions (e.g., by operating on input data and/or generating an output). Method steps can also be performed by, and apparatus for performing the methods can be implemented as, special purpose logic circuitry, *e.g.,* an FPGA (field programmable gate array) or an ASIC (application-specific integrated circuit), for example.

The various illustrative logical blocks, modules, and circuits described in connection with the embodiments disclosed herein may be implemented or performed with a general-purpose processor, a digital signal processor (DSP), an ASIC, a FPGA or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, *e.g.,* a combination of a DSP and a microprocessor, a plurality of microprocessors, one or more microprocessors in conjunction with a DSP core, or any other such configuration.

Processors suitable for the execution of a computer program include, by way of example, both general and special purpose microprocessors, and any one or more processors of any kind of digital computer. Generally, a processor will receive instructions and data from a read-only memory or a random-access memory or both. The required elements of a computer are a processor for executing instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. Information carriers suitable for embodying computer program instructions and data include all forms of non-volatile memory, including by way of example, semiconductor memory devices, *e.g.,* electrically programmable read-only memory or ROM (EPROM), electrically erasable programmable ROM (EEPROM), flash memory devices, and data storage disks (e.g., magnetic disks, internal hard disks, or removable disks, magneto-optical disks, and CD-ROM and DVD-ROM disks). The processor and the memory can be supplemented by or incorporated in special purpose logic circuitry.

Those of skill in the art understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

As used herein, "machine-readable medium" (or "computer-readable medium") means a device able to store instructions and data temporarily or permanently and may include, but is not limited to, random-access memory (RAM), read-only memory (ROM), buffer memory, flash memory, optical media, magnetic media, cache memory, other types of storage (e.g., Erasable Programmable Read-Only Memory (EEPROM)), and/or any suitable combination thereof. The term "machine-readable medium" should be taken to include a single medium or multiple media *(e.g.,* a centralized or distributed database, or associated caches and servers) able to store processor instructions. The term "machine-readable medium" shall also be taken to include any medium or a combination of multiple media, that is capable of storing instructions for execution by one or more processors 1005, such that the instructions, when executed by one or more processors 1005, cause the one or more processors 1005 to perform any one or more of the methodologies described herein. Accordingly, a "machine-readable medium" refers to a single storage apparatus or device, as well as "cloud-based" storage systems or storage networks that include multiple storage apparatus or devices. The term "machine-readable medium" as used herein excludes signals per se.

## Claims

1. A computer-implemented method for image resolution assessment of a digital image, the method comprising:

extracting a plurality of image chips from the digital image according to a predetermined sampling pattern, wherein an image chip is an image portion of the digital image;

applying a Gaussian window to each image chip of the plurality of image chips to generate a plurality of processed image chips;

determining two-dimensional, i.e. 2D, energy spectrum for each processed image chip of the plurality of processed image chips using a discrete Fourier transformation (DFT);

determining one-dimensional, i.e. 1D, energy spectrum for each processed image chip of the plurality of processed image chips using the determined 2D energy spectrum, wherein the determining of the 1D energy spectrum for each processed image chip of the plurality of processed image chips includes accumulating the determined 2D energy spectrum along a plurality of directions between pixels within each processed image chip, and

wherein the determined 1D energy spectrum is represented by image energy in frequency domain along a first axis and images resolution along a second axis;

obtaining an image resolution for each processed image chip of the plurality of processed image chips as an intersection point of an applied threshold of image energy with the second axis of the determined 1D energy spectrum; and

adjusting a video characteristic of the digital image based on a maximum image resolution of the image resolutions determined for the plurality of processed image chips, wherein adjusting the video characteristic of the digital image comprises down-sampling a video stream including the digital image based on the maximum image resolution of the image resolutions determined for the plurality of processed image chips.

2. The computer-implemented method of claim 1, further comprising:
selecting the pre-determined sampling pattern from a plurality of pre-determined sampling patterns based on a received input.

3. The computer-implemented method of claim 1, wherein the predetermined sampling pattern is one of:

a five-point diamond pattern, wherein a total of 5 image chips are selected as the plurality of image chips from intersecting points of 3 vertical and 3 horizontal axes of the digital image;
a nine-point diamond pattern, wherein a total of 9 image chips are selected as the plurality of image chips from intersecting points of 5 vertical and 5 horizontal axes of the digital image;
a nine-point square pattern, wherein a total of 9 image chips are selected as the plurality of image chips from intersecting points of 3 vertical and 3 horizontal axes of the digital image; and
a thirteen-point square pattern, wherein a total of 13 image chips are selected as the plurality of image chips from intersecting points of 5 vertical and 5 horizontal axes of the digital image.

4. The computer-implemented method of claim 1, wherein the determining of the 1D energy spectrum for each processed image chip of the plurality of processed image chips includes:

folding the 2D energy spectrum of the processed image chip vertically along an x-axis of a coordinate system; and
summing 2D energy values of pixels that are symmetric in relation to the x-axis, to obtain 2D vertically-folded energy spectrum.

5. The computer-implemented method of claim 4, wherein the determining of the 1D energy spectrum for each processed image chip of the plurality of processed image chips further includes:

folding the 2D vertically-folded energy spectrum of the processed image chip horizontally along a y-axis of the coordinate system;
summing 2D energy values of pixels that are symmetric in relation to the y-axis, to obtain 2D horizontally-folded energy spectrum; and
determining the 1D energy spectrum for the processed image chip of the plurality of processed image chips by accumulating the 2D horizontally-folded energy spectrum along a plurality of directions between pixels within the processed image chip.

6. The computer-implemented method of claim 1, wherein the determining of the 2D energy spectrum, the determining of the 1D energy spectrum, and the applying of the threshold to the determined 1D energy spectrum to obtain the image resolution are performed in parallel for each processed image chip of the plurality of processed image chips.

7. A system comprising:

a memory storing instructions; and
one or more processors in communication with the memory, wherein the one or more processors execute the instructions to:

extract a plurality of image chips from a digital image according to a predetermined sampling pattern, wherein an image chip is an image portion of the digital image;
apply a Gaussian window to each image chip of the plurality of image chips to generate a plurality of processed image chips;
determine two-dimensional, i.e. 2D, energy spectrum for each processed image chip of the plurality of processed image chips using a discrete Fourier transformation (DFT);

determine one-dimensional, i.e. 1D, energy spectrum for each processed image chip of the plurality of processed image chips using the determined 2D energy spectrum, wherein determining the 1D energy spectrum for each processed image chip of the plurality of processed image chips includes accumulating the determined 2D energy spectrum along a plurality of directions between pixels within each processed image chip, and
wherein the determined 1D energy spectrum is representable by image energy in frequency domain along a first axis and images resolution along a second axis;

obtain an image resolution for each processed image chip of the plurality of processed image chips as an intersection point of an applied threshold of image energy with the second axis of the determined 1D energy spectrum; and
adjust a video characteristic of the digital image based on a maximum image resolution of the image resolutions determined for the plurality of processed image chips, wherein adjusting the video characteristic of the digital image comprises down-sampling a video stream including the digital image based on the maximum image resolution of the image resolutions determined for the plurality of processed image chips.

8. The system of claim 7, wherein the one or more processors execute the instructions to:
select the pre-determined sampling pattern from a plurality of pre-determined sampling patterns based on a received input.

9. The system of claim 7, wherein to determine the 1D energy spectrum for each processed image chip of the plurality of processed image chips, the one or more processors execute the instructions to:

fold the 2D energy spectrum of the processed image chip vertically along an x-axis of a coordinate system; and
sum 2D energy values of pixels that are symmetric in relation to the x-axis, to obtain 2D vertically-folded energy spectrum.

10. A computer-readable medium storing computer instructions for image resolution assessment of a digital image, wherein the instructions when executed by one or more processors, cause the one or more processors to perform the method according to claim 1 or claim 2.

## Patentansprüche

1. Computerimplementiertes Verfahren zur Bildauflösungsbewertung eines digitalen Bildes, wobei das Verfahren Folgendes umfasst:

Extrahieren einer Vielzahl von Bildchips aus dem digitalen Bild gemäß einem vorbestimmten Abtastmuster, wobei ein Bildchip ein Bildabschnitt des digitalen Bildes ist;
Anwenden eines Gauß-Fensters auf jeden Bildchip der Vielzahl von Bildchips, um eine Vielzahl von verarbeiteten Bildchips zu erzeugen;
Bestimmen eines zweidimensionalen, d. h. 2D, Energiespektrums für jeden verarbeiteten Bildchip der Vielzahl von verarbeiteten Bildchips unter Verwendung einer diskreten FourierTransformation (DFT);
Bestimmen eines eindimensionalen, d. h. 1D, Energiespektrums für jeden verarbeiteten Bildchip der Vielzahl von verarbeiteten Bildchips unter Verwendung des bestimmten 2D-Energiespektrums, wobei das Bestimmen des 1D-Energiespektrums für jeden verarbeiteten Bildchip der Vielzahl von verarbeiteten Bildchips Akkumulieren des bestimmten 2D-Energiespektrums entlang einer Vielzahl von Richtungen zwischen Pixeln innerhalb jedes verarbeiteten Bildchips beinhaltet und

wobei das bestimmte 1D-Energiespektrum durch Bildenergie in einem Frequenzbereich entlang einer ersten Achse und Bildauflösung entlang einer zweiten Achse dargestellt wird;

Erlangen einer Bildauflösung für jeden verarbeiteten Bildchip der Vielzahl von verarbeiteten Bildchips als einen Schnittpunkt eines angewandten Schwellenwerts von Bildenergie mit der zweiten Achse des bestimmten 1D-Energiespektrums; und

Anpassen einer Videoeigenschaft des digitalen Bildes basierend auf einer maximalen Bildauflösung der Bildauflösungen, die für die Vielzahl von verarbeiteten Bildchips bestimmt werden, wobei das Anpassen der Videoeigenschaft des digitalen Bildes ein Herunterabtasten eines Videostreams, der das digitale Bild beinhaltet, basierend auf der maximalen Bildauflösung der Bildauflösungen, die für die Vielzahl von verarbeiteten Bildchips bestimmt wurden, umfasst.

2. Computerimplementiertes Verfahren nach Anspruch 1, ferner umfassend:
Auswählen des vorbestimmten Abtastmusters aus einer Vielzahl von vorbestimmten Abtastmustern basierend auf einer empfangenen Eingabe.

3. Computerimplementiertes Verfahren nach Anspruch 1, wobei das vorbestimmte Abtastmuster eines von den Folgenden ist:

ein Fünf-Punkt-Rautenmuster, wobei insgesamt 5 Bildchips als die Vielzahl von Bildchips aus Schnittpunkten von 3 vertikalen und 3 horizontalen Achsen des digitalen Bildes ausgewählt werden;

ein Neun-Punkt-Rautenmuster, wobei insgesamt 9 Bildchips als die Vielzahl von Bildchips aus Schnittpunkten von 5 vertikalen und 5 horizontalen Achsen des digitalen Bildes ausgewählt werden;

ein Neun-Punkt-Quadratmuster, wobei insgesamt 9 Bildchips als die Vielzahl von Bildchips aus Schnittpunkten von 3 vertikalen und 3 horizontalen Achsen des digitalen Bildes ausgewählt werden; und

ein Dreizehn-Punkt-Quadratmuster, wobei insgesamt 13 Bildchips als die Vielzahl von Bildchips aus Schnittpunkten von 5 vertikalen und 5 horizontalen Achsen des digitalen Bildes ausgewählt werden.

4. Computerimplementiertes Verfahren nach Anspruch 1, wobei das Bestimmen des 1D-Energiespektrums für jeden verarbeiteten Bildchip der Vielzahl von verarbeiteten Bildchips Folgendes beinhaltet:

Falten des 2D-Energiespektrums des verarbeiteten Bildchips vertikal entlang einer x-Achse eines Koordinatensystems; und

Summieren von 2D-Energiewerten von Pixeln, die in Bezug auf die x-Achse symmetrisch sind, um ein vertikal gefaltetes 2D-Energiespektrum zu erlangen.

5. Computerimplementiertes Verfahren nach Anspruch 4, wobei das Bestimmen des 1D-Energiespektrums für jeden verarbeiteten Bildchip der Vielzahl von verarbeiteten Bildchips ferner Folgendes beinhaltet:

Falten des vertikal gefalteten 2D-Energiespektrums des verarbeiteten Bildchips horizontal entlang einer y-Achse des Koordinatensystems;

Summieren von 2D-Energiewerten von Pixeln, die in Bezug auf die y-Achse symmetrisch sind, um ein horizontal gefaltetes 2D-Energiespektrum zu erlangen; und

Bestimmen des 1D-Energiespektrums für den verarbeiteten Bildchip der Vielzahl von verarbeiteten Bildchips durch Akkumulieren des horizontal gefalteten 2D-Energiespektrums entlang einer Vielzahl von Richtungen zwischen Pixeln innerhalb des verarbeiteten Bildchips.

6. Computerimplementiertes Verfahren nach Anspruch 1, wobei das Bestimmen des 2D-Energiespektrums, das Bestimmen des 1D-Energiespektrums und das Anwenden des Schwellenwerts auf das bestimmte 1D-Energiespektrum, um die Bildauflösung zu erlangen, parallel für jeden verarbeiteten Bildchip der Vielzahl von verarbeiteten Bildchips durchgeführt werden.

7. System, umfassend:

einen Speicher, der Anweisungen speichert; und

einen oder mehrere Prozessoren, die mit dem Speicher in Kommunikation stehen, wobei der eine oder die mehreren Prozessoren die Anweisungen zum Folgenden ausführen:

Extrahieren einer Vielzahl von Bildchips aus einem digitalen Bild gemäß einem vorbestimmten Abtastmuster, wobei ein Bildchip ein Bildabschnitt des digitalen Bildes ist;

Anwenden eines Gauß-Fensters auf jeden Bildchip der Vielzahl von Bildchips, um eine Vielzahl von verarbeiteten Bildchips zu erzeugen;

Bestimmen eines zweidimensionalen, d. h. 2D, Energiespektrums für jeden verarbeiteten Bildchip der Vielzahl von verarbeiteten Bildchips unter Verwendung einer diskreten FourierTransformation (DFT);

Bestimmen eines eindimensionalen, d. h. 1D, Energiespektrums für jeden verarbeiteten Bildchip der Vielzahl von verarbeiteten Bildchips unter Verwendung des bestimmten 2D-Energiespektrums, wobei das Bestimmen des 1D-Energiespektrums für jeden verarbeiteten Bildchip der Vielzahl von verarbeiteten Bildchips Akkumulieren des bestimmten 2D-Energiespektrums entlang einer Vielzahl von Richtungen zwischen Pixeln innerhalb jedes verarbeiteten Bildchips beinhaltet und

wobei das bestimmte 1D-Energiespektrum durch Bildenergie in einem Frequenzbereich entlang einer ersten Achse und Bildauflösung entlang einer zweiten Achse darstellbar ist;

Erlangen einer Bildauflösung für jeden verarbeiteten Bildchip der Vielzahl von verarbeiteten Bildchips als einen Schnittpunkt eines angewandten Schwellenwerts von Bildenergie mit der zweiten Achse des bestimmten 1D-Energiespektrums; und

Anpassen einer Videoeigenschaft des digitalen Bildes basierend auf einer maximalen Bildauflösung der Bildauflösungen, die für die Vielzahl von verarbeiteten Bildchips bestimmt werden, wobei das Anpassen der Videoeigenschaft des digitalen Bildes ein Herunterabtasten eines Videostreams, der das digitale Bild beinhaltet, basierend auf der maximalen Bildauflösung der Bildauflösungen, die für die Vielzahl von verarbeiteten Bildchips bestimmt wurden, umfasst.

8. System nach Anspruch 7, wobei der eine oder die mehreren Prozessoren die Anweisungen zum Folgenden ausführen:
Auswählen des vorbestimmten Abtastmusters aus einer Vielzahl von vorbestimmten Abtastmustern basierend auf einer empfangenen Eingabe.

9. System nach Anspruch 7, wobei der eine oder die mehreren Prozessoren zum Bestimmen des 1D-Energiespektrums für jeden verarbeiteten Bildchip der Vielzahl von verarbeiteten Bildchips die Anweisungen zum Folgenden ausführen:

Falten des 2D-Energiespektrums des verarbeiteten Bildchips vertikal entlang einer x-Achse eines Koordinatensystems; und
Summieren von 2D-Energiewerten von Pixeln, die in Bezug auf die x-Achse symmetrisch sind, um ein vertikal gefaltetes 2D-Energiespektrum zu erlangen.

10. Computerlesbares Speichermedium, das Computeranweisungen zur Bildauflösungsbewertung eines digitalen Bildes speichert, wobei die Anweisungen, wenn sie durch einen oder mehrere Prozessoren ausgeführt werden, den einen oder die mehreren Prozessoren dazu veranlassen, das Verfahren nach Anspruch 1 oder Anspruch 2 durchzuführen.

**Revendications**

1. Procédé mis en œuvre par ordinateur pour évaluation de la résolution d'image d'une image numérique, le procédé comprenant :

l'extraction d'une pluralité de puces d'image de l'image numérique selon un modèle d'échantillonnage prédéterminé, dans lequel une puce d'image est une partie d'image de l'image numérique ;
l'application d'une fenêtre gaussienne à chaque puce d'image de la pluralité de puces d'image pour générer une pluralité de puces d'image traitées ;
la détermination d'un spectre d'énergie bidimensionnel, c'est-à-dire 2D, pour chaque puce d'image traitée de la pluralité de puces d'image traitées à l'aide d'une transformation de Fourier discrète (DFT) ;
la détermination d'un spectre d'énergie unidimensionnel, c'est-à-dire 1D, pour chaque puce d'image traitée de la pluralité de puces d'image traitées à l'aide du spectre d'énergie 2D déterminé, dans lequel la détermination du spectre d'énergie 1D pour chaque puce d'image traitée de la pluralité de puces d'image traitées comporte l'accumulation du spectre d'énergie 2D déterminé le long d'une pluralité de directions entre des pixels de chaque puce d'image traitée, et
dans lequel le spectre d'énergie 1D déterminé est représenté par énergie d'image dans le domaine fréquentiel le long d'un premier axe et par résolution d'images le long d'un second axe ;

l'obtention d'une résolution d'image pour chaque puce d'image traitée de la pluralité de puces d'image traitées en tant que point d'intersection d'un seuil appliqué d'énergie d'image avec le second axe du spectre d'énergie 1D déterminé ; et

le réglage d'une caractéristique vidéo de l'image numérique sur la base d'une résolution d'image maximale des résolutions d'image déterminées pour la pluralité de puces d'image traitées, dans lequel le réglage de la caractéristique vidéo de l'image numérique comprend le sous-échantillonnage d'un flux vidéo comportant l'image numérique sur la base de la résolution d'image maximale des résolutions d'image déterminées pour la pluralité de puces d'image traitées.

2. Procédé mis en œuvre par ordinateur selon la revendication 1, comprenant également :
la sélection du modèle d'échantillonnage prédéterminé parmi une pluralité de modèles d'échantillonnage prédéterminés sur la base d'une entrée reçue.

3. Procédé mis en œuvre par ordinateur selon la revendication 1, dans lequel le modèle d'échantillonnage prédéterminé est l'un des éléments suivants :

un motif en losange à cinq points, dans lequel un total de 5 puces d'image sont sélectionnées comme pluralité de puces d'image à partir de points d'intersection de 3 axes verticaux et 3 axes horizontaux de l'image numérique ;
un motif en losange à neuf points, dans lequel un total de 9 puces d'image sont sélectionnées comme pluralité de puces d'image à partir de points d'intersection de 5 axes verticaux et 5 axes horizontaux de l'image numérique ;
un motif en carré à neuf points, dans lequel un total de 9 puces d'image sont sélectionnées comme pluralité de puces d'image à partir de points d'intersection de 3 axes verticaux et 3 axes horizontaux de l'image numérique ; et
un motif en carré à treize points, dans lequel un total de 13 puces d'image sont sélectionnées comme pluralité de puces d'image à partir de points d'intersection de 5 axes verticaux et 5 axes horizontaux de l'image numérique.

4. Procédé mis en œuvre par ordinateur selon la revendication 1, dans lequel la détermination du spectre d'énergie 1D pour chaque puce d'image traitée de la pluralité de puces d'image traitées comporte :

le pliage du spectre d'énergie 2D de la puce d'image traitée verticalement le long d'un axe x d'un système de coordonnées ; et
l'addition de valeurs d'énergie 2D de pixels symétriques par rapport à l'axe x, pour obtenir un spectre d'énergie 2D plié verticalement.

5. Procédé mis en œuvre par ordinateur selon la revendication 4, dans lequel la détermination du spectre d'énergie 1D pour chaque puce d'image traitée de la pluralité de puces d'image traitées comporte également :

le pliage du spectre d'énergie 2D plié verticalement de la puce d'image traitée horizontalement le long d'un axe y du système de coordonnées ;
l'addition de valeurs d'énergie 2D de pixels symétriques par rapport à l'axe y, pour obtenir un spectre d'énergie 2D plié horizontalement ; et
la détermination du spectre d'énergie 1D pour la puce d'image traitée de la pluralité de puces d'image traitées en accumulant le spectre d'énergie 2D plié horizontalement le long d'une pluralité de directions entre des pixels dans la puce d'image traitée.

6. Procédé mis en œuvre par ordinateur selon la revendication 1, dans lequel la détermination du spectre d'énergie 2D, la détermination du spectre d'énergie 1D, et l'application du seuil au spectre d'énergie 1D déterminé pour obtenir la résolution d'image sont effectuées en parallèle pour chaque puce d'image traitée de la pluralité de puces d'image traitées.

7. Système comprenant :

une mémoire stockant des instructions ; et
un ou plusieurs processeurs en communication avec la mémoire, dans lequel les un ou plusieurs processeurs exécutent les instructions pour :

extraire une pluralité de puces d'image d'une image numérique selon un modèle d'échantillonnage prédéterminé, dans lequel une puce d'image est une partie d'image de l'image numérique ;
appliquer une fenêtre gaussienne à chaque puce d'image de la pluralité de puces d'image pour générer une pluralité de puces d'image traitées ;

déterminer un spectre d'énergie bidimensionnel, c'est-à-dire 2D, pour chaque puce d'image traitée de la pluralité de puces d'image traitées à l'aide d'une transformation de Fourier discrète (DFT) ;

déterminer un spectre d'énergie unidimensionnel, c'est-à-dire 1D, pour chaque puce d'image traitée de la pluralité de puces d'image traitées à l'aide du spectre d'énergie 2D déterminé, dans lequel la détermination du spectre d'énergie 1D pour chaque puce d'image traitée de la pluralité de puces d'image traitées comporte l'accumulation du spectre d'énergie 2D déterminé le long d'une pluralité de directions entre des pixels de chaque puce d'image traitée, et

dans lequel le spectre d'énergie 1D déterminé est représentable par énergie d'image dans le domaine fréquentiel le long d'un premier axe et par résolution d'images le long d'un second axe ;

obtenir une résolution d'image pour chaque puce d'image traitée de la pluralité de puces d'image traitées en tant que point d'intersection d'un seuil appliqué d'énergie d'image avec le second axe du spectre d'énergie 1D déterminé ; et

régler une caractéristique vidéo de l'image numérique sur la base d'une résolution d'image maximale des résolutions d'image déterminées pour la pluralité de puces d'image traitées, dans lequel le réglage de la caractéristique vidéo de l'image numérique comprend le sous-échantillonnage d'un flux vidéo comportant l'image numérique sur la base de la résolution d'image maximale des résolutions d'image déterminées pour la pluralité de puces d'image traitées.

8. Système selon la revendication 7, dans lequel les un ou plusieurs processeurs exécutent les instructions pour :
sélectionner le modèle d'échantillonnage prédéterminé parmi une pluralité de modèles d'échantillonnage prédéterminés sur la base d'une entrée reçue.

9. Système selon la revendication 7, dans lequel, pour déterminer le spectre d'énergie 1D de chaque puce d'image traitée de la pluralité de puces d'image traitées, les un ou plusieurs processeurs exécutent les instructions suivantes :

plier le spectre d'énergie 2D de la puce d'image traitée verticalement le long d'un axe x d'un système de coordonnées ; et

additionner les valeurs d'énergie 2D de pixels symétriques par rapport à l'axe x, pour obtenir un spectre d'énergie 2D plié verticalement.

10. Support lisible par ordinateur stockant des instructions informatiques pour évaluation de la résolution d'image d'une image numérique, dans lequel les instructions, lorsqu'elles sont exécutées par un ou plusieurs processeurs, amènent les un ou plusieurs processeurs à réaliser le procédé selon la revendication 1 ou la revendication 2.

**FIG. 1**

**FIG. 2**

FIG. 3

FIG. 4

FIG. 5

FIG. 6

FIG. 7

800

EXTRACT A PLURALITY OF IMAGE CHIPS FROM A DIGITAL IMAGE ACCORDING TO A PREDETERMINED SAMPLING PATTERN ⟋ 802

APPLY A GAUSSIAN WINDOW TO EACH IMAGE CHIP OF THE PLURALITY OF IMAGE CHIPS TO GENERATE A PLURALITY OF PROCESSED IMAGE CHIPS ⟋ 804

DETERMINE TWO-DIMENSIONAL (2D) ENERGY SPECTRUM FOR EACH PROCESSED IMAGE CHIP OF THE PLURALITY OF PROCESSED IMAGE CHIPS USING A DISCRETE FOURIER TRANSFORMATION (DFT) ⟋ 806

DETERMINE ONE-DIMENSIONAL (1D) ENERGY SPECTRUM FOR EACH PROCESSED IMAGE CHIP OF THE PLURALITY OF PROCESSED IMAGE CHIPS USING THE 2D ENERGY SPECTRUM ⟋ 808

OBTAIN AN IMAGE RESOLUTION FOR EACH PROCESSED IMAGE CHIP OF THE PLURALITY OF PROCESSED IMAGE CHIPS BY APPLYING A THRESHOLD TO THE DETERMINED 1D ENERGY SPECTRUM ⟋ 810

ADJUST A VIDEO CHARACTERISTIC OF THE DIGITAL IMAGE BASED ON A MAXIMUM IMAGE RESOLUTION OF THE IMAGE RESOLUTIONS DETERMINED FOR THE PLURALITY OF PROCESSED IMAGE CHIPS ⟋ 812

# FIG. 8

**FIG. 9**

*1000*

**FIG. 10**

**EP 3 973 501 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2016379057 A1